# EUROPÄISCHE PATENTSCHRIFT

(11) **EP 2 407 324 B1**
(45) Veröffentlichungstag und Bekanntmachung des Hinweises auf die Patenterteilung: **12.03.2014**
(21) Anmeldenummer: 10290399.4
(22) Anmeldetag: 16.07.2010
(51) Int. Cl.: B60H 1/00

(54) **Luftregulierungselement für eine Heizungs- und Belüftungsvorrichtung für ein Kraftfahrzeug sowie Heizungs- und Belüftungsvorrichtung für einen Fahrgastraum eines Kraftfahrzeuges**
Air regulator element for a heating and ventilation device for a motor vehicle and heating and ventilation device for a passenger area of a motor vehicle
Elément de régulation d'air pour un dispositif de chauffage et d'aération pour un véhicule automobile et dispositif de chauffage et d'aération pour un espace passager d'un véhicule automobile

(43) Veröffentlichungstag der Anmeldung: 18.01.2012
(73) Patentinhaber: Behr France Rouffach SAS, 68250 Rouffach (FR)
(72) Erfinder: Klein, Henri, 68360 Soultz (FR)
(74) Vertreter: Grauel, Andreas

(56) Entgegenhaltungen:
- EP-A1- 0 865 945
- EP-A1- 1 514 707
- EP-A1- 1 535 770
- EP-A2- 1 880 881

## Beschreibung

Die Erfindung betrifft ein Luftregulierungselement für eine Heizungs- und Belüftungsvorrichtung für ein Kraftfahrzeug sowie eine Heizungs- und Belüftungsvorrichtung für einen Fahrgastraum eines Kraftfahrzeuges.

Bei Klimaanlagen eines Kraftfahrzeuges weist ein Luftführungsgehäuse einen Mischbereiches auf, vor welchem eine Trommelklappe als Mischklappe angeordnet, welche die Öffnung eines Lufterwärmungsstranges und eines Kaltluftübertragungsstranges je nach Stellung ganz oder teilweise freigibt oder verschließt. Ihre Schwenkachse ist dabei im Mischraum angeordnet.

Aus der DE 199 16 992 A1 ist eine Heizungs- und Belüftungsvorrichtung für den Fahrgastraum eines Kraftfahrzeuges bekannt, welche einen Kaltluftübertragungsstrang und einen Lufterwärmungsstrang aufweist, die in einem Mischbereich münden. An den Mischbereich schließen sich ein Entfrostungskanal, ein Front-Belüftungskanal und ein Fond-Belüftungskanal an. Eine erste Verteilungsklappe verteilt dabei die Luft zwischen dem Fond-Belüftungskanal und einer Auslasskammer, an die der Entfrostungskanal und der Front-Belüftungskanal angeschlossen sind. Eine zweite Verteilungsklappe verteilt die durch die Auslasskammer zugeführte Luft zwischen dem Entfrostungskanal und dem Front-Belüftungskanal. Beide Mischklappen sind dabei als eine, eine Schwenkachse umfassende Trommelklappe ausgeführt und werden unabhängig voneinander betätigt.

Eine solche Heizungs- und Belüftungsvorrichtung hat den Nachteil, dass ein großer Bauraum zur Unterbringung der beiden Verteilungsklappen erforderlich ist, insbesondere um deren voneinander getrennte Bewegungen zu realisieren.

Um ein Luftreguüerungselement und eine Heizungs- und Belüftungsvorrichtung anzugeben, bei welchem der Bauraum für die Verteilungsklappen reduziert wird, wird im der EP 0865945 ein Luftregulierungselement offenbart, wobei eine erste Verteilungsklappe und eine zweite Verteilungsklappe über eine gemeinsame Schwenkachse fest verbunden sind. Der Erfindung liegt die Aufgabe zugrunde, dieses Luftregulierungselement zu verbessern.

Die Aufgabe wird durch des Luftregulierungselement nach den Merkmalen des Anspruchs 1 gelöst.

Erfindungsgemäß weist das Luftregulierungselement eine erste Verteilungsklappe auf, die über eine gemeinsame Schwenkachse mit einer zweiten Verteilungsklappe fest verbunden ist. Dies hat den Vorteil, dass nur ein einziges Luftregulierungselement im Luftweg angeordnet wird, welches weniger Bauraum beansprucht als zwei getrennte Mischklappen. Das Luftregullerungselement erfüllt dabei die Auf gaben, die sonst von zwei baulich getrennten Klappen ausgeführt werden. Durch die Verwendung nur eines einzigen Luftregulierungselementes reduzieren sich auch die Kosten bei der Herstellung.

Erfindungsgemäß sind die erste Verteilungsklappe und die zweite Verteilungsklappe einteilig, insbesondere aus Kunststoff, ausgebildet. Die einteilige Ausbildung ermöglicht eine kostengünstige Herstellung des Luftregulierungselementes, insbesondere durch einen Spritzgießprozess. Auf zusätzliche Montageschritte, bei welchen die erste und die zweite Mischklappe mit einander verbunden werden, wird verzichtet.

Erfindungsgemäß ist die Schwenkachse nicht mittig angeordnet. Durch die nicht mittige Anordnung der Schwenkachse werden die Abmessungen des Luftregulierungselementes so bestimmt, dass jeweils ein Teil des Luftregulierungselementes einen ersten Belüftungskanal und der andere Teil des Luftregutierungselementes einen zweiten Belüftungskanal einer Heizungs-und Belüftungseinrichtung öffnet oder verschließt. Dabei werden beide Belüftungskanäle durch das Schwenken des Luftregulierungselementes um die gemeinsame Schwenkachse gekoppelt betätigt. Der erste Belüftungskanal und der zweite Belüftungskanal befinden sich dabei immer im gleichen Belüftungszustand und sind entweder geöffnet oder geschlossen, Eine zusätzliche Verteilungsklappe, mit welcher nur ein Belüftungskanal geöffnet oder verschlossen wird, kann dabei entfallen.

Erfindungsgemäß ist die erste Verteilungsklappe als Trommelklappe und die zweite Mischklappe als Schmetterlingsklappe ausgebildet. Diese Ausbildung trägt insbesondere den Bauverhältnissen des Mischbereiches der Heizungs- und Belüftungseinrichtung Rechnung, wo die zylindertörmig ausgebildete Trommelklappe sich in den Bereich des Eingangs eines Belüf tungskanals erstreckt, wo ein großer Bauraum vorhanden ist, während die flach ausgebildete Schmetterlingsklappe, welche zwei Flügel aufweist, besonders platzsparend ausgebildet ist.

In einer Variante gibt es zusätzlich zu der Trommelklappe eine brückenähnliche Anordnung, wie ein Brückenelement, das der gezielten Luftverteilung dient. Dadurch wird beim Einsatz des erfindungsgemäßen Luftregulierungselementes sichergestellt, dass die Luft, welche durch das eine Luftregulierungselement verteilt wird, nicht nur in den ersten Belüftungskanal fließt, sondern auch ausreichend Luft in den zweiten Belüftungskanal umgeleitet wird.

In einer Ausgestaltung weist die brückenähnliche Anordnung mindestens einen annähernd U-förmig ausgebildeten Steg auf, wobei seitlich von dem Steg oder zwischen den Stegen eine Luftdurchlassöffnung angeordnet ist. Die U-förmige Ausbildung des Steges der brückenähnlichen Anordnung gewährleistet ein einfaches Herstellungsverfahren, wobei der Steg oder die Stege ein Luftdurchlassgitter bilden, wodurch Teile der Luft durch diese Stege umgelenkt werden.

Eine Weiterbildung der Erfindung betrifft eine Heizungs- und Belüftungsvorrichtung für einen Fahrgastraum eines Kraftfahrzeuges mit einem Lufterwärmungsstrang und einem Kaltluftübertragungsstrang, welche in einen Mischbereich zusammengeführt sind, von welchem ein Entfrostungskanal, ein Front-Belüftungskanal und ein Fond-Belüftungskanal abzweigen, wobei eine Verteilungsklappe in den Luftweg eingesetzt ist. Um den Bauraum für eine solche Heizungs- und Belüftungsvorrichtung weiter zu verkleinern, ist die Verteilungsklappe als Luftregulierungselement gemäß der vorliegenden Schutzrechtsanmeldung ausgebildet. Dies hat den Vorteil, dass nur ein einziges Luftregulierungselement in der Heizungs- und Belüftungsvorrichtung benötigt wird, welches gleichzeitig den Front- Belüftungskanal, den Fond-Belüftungskanal und den Entfrostungskanal in seinem Luftdurchsatz steuert, was eine sehr kostengünstige und platzsparende Ausgestaltung darstellt.

Vorteilhafterweise ist die Schwenkachse des Luftregulierungselementes im Verteilungsbereich nahe des Front-Belüftungskanals angeordnet. Die Schwenkachse ist dabei so positioniert, dass ein optimales, synchrones Öffnen und Verschließen des Front-Belüftungskanals und des Fond-Belüftungskanals möglich ist.

In einer Variante ist die Schwenkachse in der Nähe einer Wandung positioniert, welche den Front-Belüftungskanal mit dem Fond-Belüftungskanal verbindet. Durch die nicht zentrische Anordnung der Schwenkachse kann der Mischraum verkleinert werden, so dass nur so viel Platz benötigt wird, wie für die Betätigung des Luftregulierungselementes und dessen zuverlässigen Bewegung notwendig ist.

In einer Ausgestaltung überdeckt die brückenähnliche Anordnung bei verschlossenem Entfrostungskanal einen Teil des Eingangs des Front-Belüftungskanals. Dies hat den Vorteil, dass die Luft nicht nur durch den Front-Belüftungskanal ausströmt oder Turbulenzen erzeugt, sondern durch die brückenähnliche Anordnung Teile der Luft, die aus dem Mischbereich herausströmen, umgelenkt werden und gleichzeitig in den Fond-Belüftungskanal weitergeleitet werden. Damit ist sichergestellt, dass auch der Fond-Belüftungskanal ausreichend mit Luft versorgt wird.

Die Erfindung lässt zahlreiche Ausführungsformen zu. Eine davon soll anhand der in der Zeichnung dargestellten Figuren näher erläutert werden.

Es zeigt:
- Figur 1:: perspektivische Ansicht eines Ausführungsbeispiels des Luftregulierungselementes,
- Figur 2:: perspektivische Ansicht eines Ausführungsbeispiels des Luftregulierungselementes nach Figur 1 von unten,
- Figur 3:: Schnitt durch eine Heizungs- und Belüftungsvorrichtung mit eingebautem Luftregulierungselement, bei welchem der Front-Belüftungskanal durchströmt wird.
- Figur 4:: ein Schnitt durch die Heizungs- und Belüftungsvorrichtung, bei welcher der Entfrostungskanal durchströmt wird,
- Figur 5:: Schnitt durch die Heizungs- und Belüftungsvorrichtung im Bereich der brückenähnlichen Anordnung,
- Figur 6:: Schnitt durch die Heizungs- und Belüftungsvorrichtung im Bereich der brückenähnlichen Anordnung bei Belüftung des Entfrostungskanals,
- Figur 7:: Schnitt durch die brückenähnliche Anordnung-

Gleiche Merkmale sind mit gleichen Bezugszeichen gekennzeichnet.

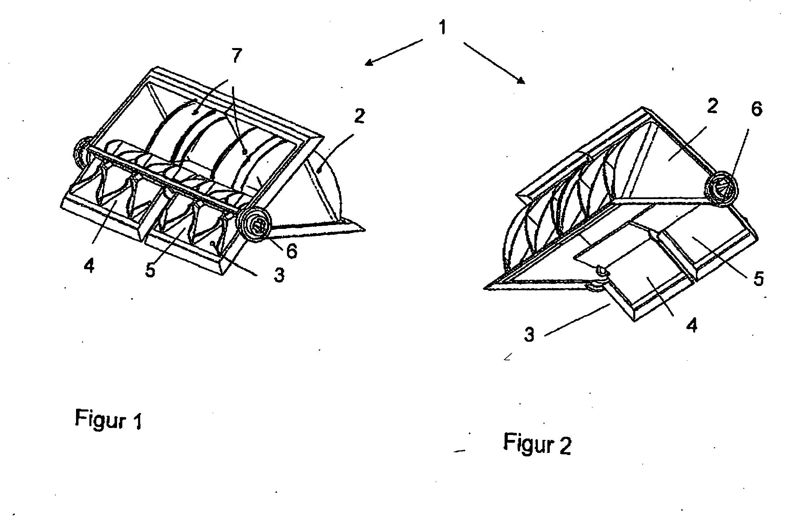

Figur 1 zeigt ein Ausführungsbeispiel eines Luftregulierungselementes 1, welches aus einer Trommelklappe 2 und einer Schmetterlingsklappe 3 zusammengesetzt ist. Die Trommelklappe 2 ist für die Steuerung der Luft in einem Front-Belüftungskanal und in dem Entfrostungskanal einer Heizungs-und Belüftungsanlage, welche auch als Klimaanlage bezeichnet wird, vorgesehen, während die Schmetterlingsklappe 3 die Luftregulierung für einen Fond-Belüftungskanal übernimmt. Die Trommelklappe 2 weist dabei einen absperrenden, verschwenkbaren Teil in Form eines annähernd hohlzylindrischen Bereiches und zwei seitlich davon angeordnete, in radialer Richtung verlaufende Kreissegmente auf, wobei die Trommelklappe 2 um eine Schwenkachse 6 verschwenkbar ist, die koaxial zum hohlzylindrischen Bereich verläuft. Die Schmetterlingsklappe 3 besteht aus zwei separaten Flügeln 4 bzw. 5 und ist in vorgegebenem Fall symmetrisch mit gleicher Flügellänge ausgebildet. Die Trommelklappe 2 und die Schmetterlingsklappe 3 sind über eine gemeinsame Schwenkachse 6 mit einander verbunden, wobei die Trommelklappe 2 und die Schmetterlingsklappe 3 ein einteiliges Bauteil darstellen, welches aus Kunststoff hergestellt ist. Darüber hinaus enthält die Trommelklappe 2 eine brückenähnliche Anordnung 7.

In Figur 2 ist eine zweite perspektivische Darstellung des erfindungsgemä-βen Luftregulierungselementes 1 in einer Ansicht von unten dargestellt. Auch hieraus ist ersichtlich, dass die Trommelklappe 2 und die Schmetterlingsklappe 3 eine gemeinsame Schwenkachse 6 aufweisen, wobei die Trommelklappe 2 und die Schmetterlingsklappe 3 mit ihren beiden Flügeln 4 und 5 in einem stumpfen Winkel zu einander geneigt sind.

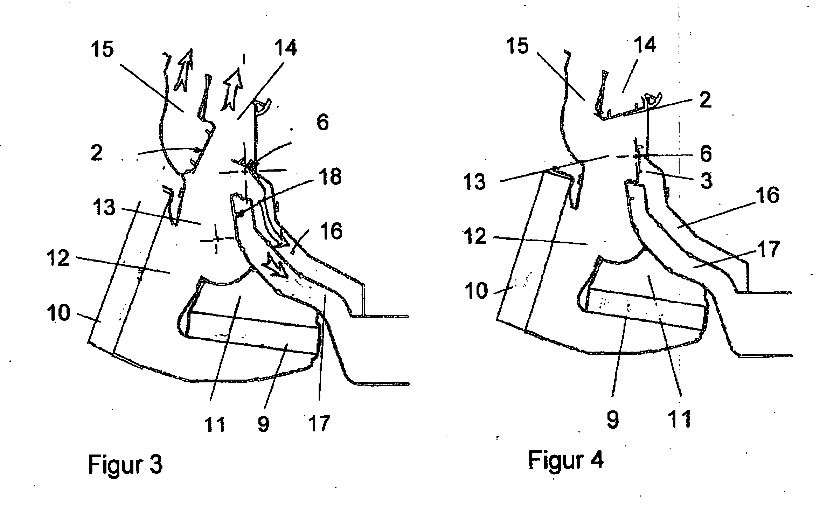

In Figur 3 ist eine Heizungs- und Belüftungsvorrichtung für den Fahrgastraum eines Kraftfahrzeuges dargestellt, in welchem das Luftregulierungselement 1 gemäß Figuren 1 und 2 eingebaut ist. Die Heizungs- und Belüftungseinrichtung weist dabei einen Heizkörper 9 auf, welcher einen Lufterwärmungsstrang 11 erwärmt. Darüber hinaus ist ein Verdampfer 10 vorhanden, durch welchen gekühlte Luft in einen Kaltluftübertragungsstrang 12 einfließt. Der Lufterwärmungsstrang 11 und der Kaltluftübertragungsstrang 12 münden in den Mischbereich 13, in welchem auch das Luftregulierungselement 1 angeordnet ist. Von dem Mischbereich 13 ausgehend erstrecken sich der Front-Belüftungskanal 14, der Entfrostungskanal 15, der Fond-Belüftungskanal 16 sowie ein Fußbelüftungskanal 17, welcher mit einer Fußraumklappe 18 verschlossen ist und im Weiteren nicht weiter betrachtet werden soll.

Zur besseren Verdeutlichung sind von dem Luftregulierungselement 1, welches im Mischbereich 13 positioniert ist, nur die einzelnen Mischklappen, wie die Trommelklappe 2 und die Schmetterlingsklappe 3, angedeutet, wobei die Schwenkachse 6 des Luftregulierungselementes 1 nahe dem Front-Belüftungskanal 14, insbesondere in der Nähe einer Wandung, angeordnet ist, die den Front-Belüftungskanal 14 mit dem Fond-Belüftungskanal 16 verbindet.

In Figur 3 ist ein Schnitt durch die Heizungs- und Belüftungseinrichtung dargestellt, welche das Luftregulierungselement 1 enthält. Die Belüftung des Fahrgastraums erfolgt über den Fond- 16 und über den Front- Belüftungskanal 14. Dabei ist mittels der Trommelklappe 2 der Entfrostungskanal 15 verschlossen, während der Front-Belüftungskanal 14 und gleichzeitig der Fond-Belüftungskanal 16 geöffnet sind, da die Klappen 2 und 3 den Front-Belüftungskanal 14 als auch den Fond-Belüftungskanal 16 freigeben.

Figur 4 zeigt einen Schnitt durch die Heizungs- und Belüftungsvorrichtung in einem Zustand, wenn das Luftregulierungselement 1 die Lage eingenommen hat, dass der Entfrostungskanal 15, welcher zur Frontscheibe des Kraftfahrzeuges hin gerichtet ist, geöffnet ist. Wie der Figur 4 zu entnehmen ist, verschließt die Trommelklappe 2 dabei den Front-Belüfturigskanal 14, während der Fond-Belüftungskanal 16 durch die Schmetterlingsklappe 3 verschlossen wird. Somit wird sichergestellt, dass der Front-Belüftungskanal 14 und der Fond-Belüftungskanal 16 durch nur ein einziges Luftregulierungselement 1 gleichzeitig gesteuert werden.

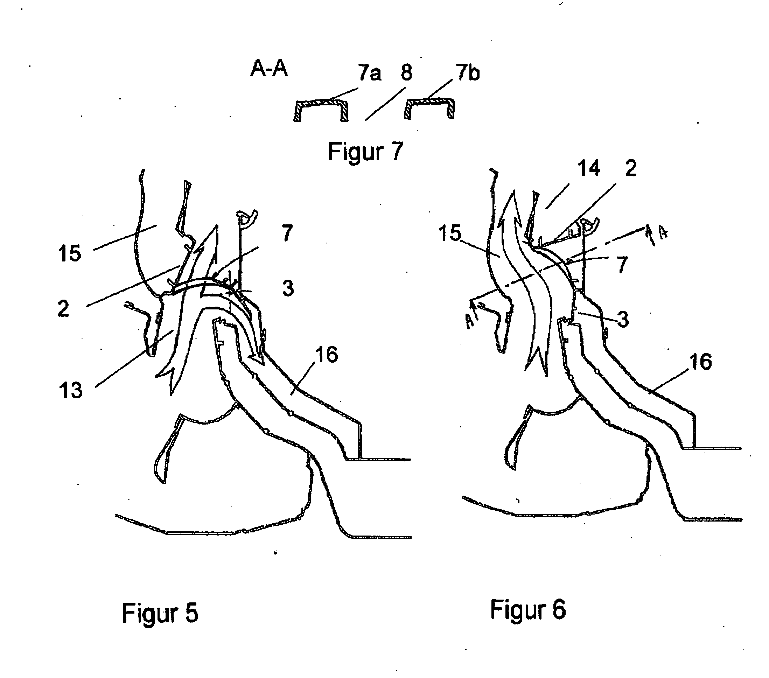

Gemäß Figur 5 weist die Trommelklappe 2 gleichzeitig eine brückenähnliche Anordnung 7 auf, welche aus mehreren Stegen 7a, 7b besteht, so dass sich eine gitterähnliche Struktur ausbildet. Die Stege 7a, 7b der brückenähnlichen Anordnung 7 sind dabei U-förmig ausgebildet und nehmen ungefähr ein Drittel der Fläche des Einlasses des Front-Belüftungskanals 14 ein. Dieser Zustand wird insbesondere dann eingenommen, wenn die Trommelklappe 2 den Entfrostungskanal 15 geschlossen hält. Durch die Stege 7a, 7b wird die Luftverteilung innerhalb der Heizungs- und Belüftungsvorrichtung derart reguliert, dass nicht nur Luft durch den Front-Belüftungskanal 14 strömt, sondern durch die Stege 7a, 7b Teile der Luft in den Fond-Belüftungskanal 16 umgelenkt werden. Damit wird sichergestellt, dass auch der Fond-Belüftungskanal 16 ausreichend mit Luft versorgt wird. Die Umlenkung der Luft wird durch die U-förmige Gestaltung der Stege 7a, 7b unterstützt.

In der Figur 6 ist die Lage der brückenähnlichen Anordnung 7 dargestellt, wenn die Trommelklappe 2 den Fond-Belüftungskanal 14 verschließt. Auch in diesem Fall wird aufgrund der gemeinsamen Schwenkachse 6 gleichzeitig durch die Schmetterlingsklappe 3 der Fond-Belüftungskanal 16 blockiert. Die Luft strömt aus dem Mischbereich 13 nun in den Entfrostungskanal 15. Die U-förmige Stege 7a, 7b der brückenähnlichen Anordnung 7, welche vor der Trommelklappe 2 am Eingang des Belüftungskanals 14 angeordnet sind, dienen dazu, die Wirbelbüdung der Luftströmung innerhalb des davor liegenden Mischbereiches 13 zu unterbinden, so dass eine laminare Strömung in den Entfrostungskanal 15 eintritt.

In Figur 7 ist die Ausgestaltung der brückenähnlichen Anordnung im Einzelnen näher dargestellt. Dabei handelt es sich um einen Schnitt entlang der Linie A-A entsprechend Figur 6. Mehrere U-förmig ausgebildete Stege 7a und 7b sind durch eine Luftdurchlassöffnung 8 getrennt. Damit handelt es sich bei diesen Stegen 7a, 7b um sehr einfach zu realisierende Kunststoffteile.

Aufgrund der vorliegenden Erfindung ist es mit nur einem Luftregulierungselement 1 möglich, drei Kanäle der Heizungs- und Belüftungsvorrichtung zu steuern, das sind der Entfrostungskanal 15, der Front-Belüftungskanal 14 sowie der Fond-Belüftungskanal 16. Der Einsatz nur eines Luftregulierungselementes 1 reduziert den Platzbedarf in der Heizungs- und Belüftungseinrichtung sowie deren Herstellungskosten. Eine besonders gute Belüftung wird erreicht, wenn die Luft in den einzelnen Kanälen beispielsweise wie folgt verteilt wird: Durch den Belüftungskanal 14 fließt 78% der vorhandenen Luft, während durch den Fond-Belüftungskanal 16 22% der Luft zirkuliert. Durch die erfindungsgemäße Ausgestaltung des Luftregulierungselementes 1 hat dieses nur geringe Winkelwege von ungefähr 45° zurück zu legen, um sowohl den Front-Belüftungskanal 14 und den Fond-Belüftungskanal 16 als auch den Entfrostungskanal 15 zu öffnen und zu schließen.

## Patentansprüche

1. Luftregulierungselement für eine Heizungs- und Belüftungsvorrichtung für ein Kraftfahrzeug, welches eine erste Verteilungsklappe (2) aufweist, wobei die erste Verteilungsklappe (2) über eine gemeinsame Schwenkachse (6) mit einer zweiten Verteilungsklappe (3) fest verbunden ist, wobei die erste (2) und die zweite Verteilungsklappe (3) einteilig, insbesondere aus Kunststoff, ausgebildet sind, die Schwenkachse (6) nicht mittig angeordnet ist und die erste Verteilungsklappe (2) als Trommelklappe mit einem absperrenden verschwenkbaren Teil in Form eines hohlzylindrischen Bereichs und zwei seitlich davon angeordneten und in radialer Richtung verlaufenden Kreissegmenten und die zweite Verteilungsklappe (3) als Schmetterlingsklappe mit zwei beabstandet zueinander angeordneten Flügeln (4,5) ausgebildet ist, **dadurch gekennzeichnet, dass** die Kreissegmente der Trommelklappe (2) und die beiden Flügel (4,5) der Schmetterlingsklappe (3) in einem stumpfen Winkel zu einander geneigt sind.

2. Luftregulierungselement nach Anspruch 1, **dadurch gekennzeichnet, dass** die Trommelklappe (2) eine brückenahnliche Anordnung (7) zur gezielten Luftverteilung aufweist.

3. Luftregulierungselement nach Anspruch 2, **dadurch gekennzeichnet, dass** die die brückenähnliche Anordnung (7) mindestens einen U-förmig ausgebildeten Steg oder mindestens zwei Stege (7a, 7b) aufweist, zwischen welchen oder seitlich von welchen sich eine Luftdurchlassöffnung (8) erstreckt.

4. Heizungs- und Belüftungsvorrichtung für einen Fahrgastraum eines Kraftfahrzeuges, mit einem Lufterwärmungsstrang (11) und einem Kaltluftübertragungsstrang (12), welche in einem Luftmischbereich (13) zusammengeführt sind, von welchen ein Entfrostungskanal (15), ein Front-Belüftungskanal (14) und ein Fond-Belüftungskanal (16) abzweigen, wobei eine Verteilungsklappe (2) in den Luftmischbereich (13) eingesetzt ist, **dadurch gekennzeichnet, dass** die Verteilungsklappe (2) als Luftregulierungselement (1) gemäß mindestens einem der vorhergehenden Ansprüche 1 bis 3 ausgebildet ist.

5. Heizungs- und Belüftungsvorrichtung nach Anspruch 4, **dadurch gekennzeichnet, dass** die Schwenkachse (6) des Luftregulierurigselementes (1) im Luftmischbereich (13) nahe des Front-Belüftungskanals (14) angeordnet ist.

6. Heizungs- und Belüftungsvorrichtung nach Anspruch 5, **dadurch gekennzeichnet, dass** die Schwenkachse (6) in der Nähe einer Wandung positioniert ist, welche den Front-Belüftungskanal (14) mit dem Fond-Belüftungskanal (16) verbindet.

7. Heizungs- und Belüftungsvorrichtung nach Anspruch 4, 5 oder 6, **dadurch gekennzeichnet, dass** die brückenähnliche Anordnung (7) bei verschlossenem Entfrostungskanal (15) einen Eingang des Front-Belüftungskanals (14) überdeckt.

## Claims

1. An air regulating element for a heating and ventilation device for a motor vehicle, comprising a first distribution flap (2), wherein the first distribution flap (2) is fixedly connected via a common pivot axis (6) to a second distribution flap (3), wherein the first distribution flap (2) and the second distribution flap (3) are formed in one part, in particular from plastic, the pivot axis (6) is not arranged centrally, and the first distribution flap (2) is formed as a drum valve having a blocking, pivotable part in the form of a hollow-cylindrical region and two circular segments arranged to the side thereof and running in the radial direction, and the second distribution flap (3) is formed as a butterfly valve having two interspaced wings (4, 5), **characterised in that** the circular segments of the drum valve (2) and the two wings (4, 5) of the butterfly valve (3) are inclined relative to one another at an obtuse angle.

2. The air regulating element according to claim 1, **characterised in that** the drum valve (2) comprises a bridge-like arrangement (7) for selective air distribution.

3. The air regulating element according to claim 2, **characterised in that** the bridge-like arrangement (7) comprises at least one U-shaped web or at least two webs (7a, 7b), between which or to the side of which an air passage opening (8) extends.

4. A heating and ventilation device for a passenger compartment of a motor vehicle, comprising an air warming section (11) and a cold air transfer section (12), which are combined in an air mixing region (13), from which a defrosting duct (15), a front ventilation duct (14) and a rear ventilation duct (16) branch off, wherein a distribution flap (2) is inserted into the air mixing region (13), **characterised in that** the distribution flap (2) is formed as an air regulating element (1) according to at least one of preceding claims 1 to 3.

5. The heating and ventilation device according to claim 4, **characterised in that** the pivot axis (6) of the air regulating element (1) in the air mixing region (13) is arranged close to the front ventilation duct (14) .

6. The heating and ventilation device according to claim 5, **characterised in that** the pivot axis (6) is positioned in the vicinity of a wall connecting the front ventilation duct (14) to the rear ventilation channel (16).

7. The heating and ventilation device according to claim 4, 5 or 6, **characterised in that** the bridge-like arrangement (7) covers an inlet of the front ventilation duct (14) when the defrosting duct (15) is closed.

## Revendications

1. Elément de régulation d'air pour un dispositif de chauffage et de ventilation pour un véhicule automobile, élément de régulation d'air qui comprend un premier volet répartiteur d'air (2), où le premier volet répartiteur d'air (2) est solidaire d'un deuxième volet répartiteur d'air (3), par un axe de pivotement commun (6), où le premier (2) et le deuxième (3) volets répartiteurs d'air sont configurés en formant une seule et même pièce, en particulier en matière plastique, l'axe de pivotement (6) n'est pas disposé au milieu, et le premier volet répartiteur d'air (2) est configuré comme un volet tambour ayant une partie pouvant pivoter et se fermant, cette partie se présentant sous la forme d'une zone cylindrique creuse, et ayant deux segments de cercle disposés latéralement par rapport à cette zone et s'étendant dans la direction radiale, le deuxième volet répartiteur d'air (3) étant configuré comme un volet papillon ayant deux ailettes (4, 5) disposées en étant espacées l'une de l'autre, **caractérisé en ce que** les segments de cercle du volet tambour (2) et les deux ailettes (4, 5) du volet papillon (3) sont inclinés les uns par rapport aux autres suivant un angle obtus.

2. Elément de régulation d'air selon la revendication 1, **caractérisé en ce que** le volet tambour (2) présente un agencement (7), en forme de pont, pour la répartition ciblée de l'air.

3. Elément de régulation d'air selon la revendication 2, **caractérisé en ce que** l'agencement en forme de pont (7) présente au moins une passerelle configurée en forme de U ou bien au moins deux passerelles (7a, 7b) entre lesquelles ou latéralement par rapport à celles-ci s'étend une ouverture de passage d'air (8).

4. Dispositif de chauffage et de ventilation pour l'habitacle d'un véhicule automobile, comprenant un circuit de chauffage par ventilateur (11) et un circuit de transmission d'air froid (12) qui sont réunis dans une zone de mélange d'air (13), circuits d'où partent un conduit de dégivrage (15), un conduit de ventilation situé à l'avant (14) et un conduit de ventilation situé à l'arrière (16), où un volet répartiteur d'air (2) est utilisé dans la zone de mélange d'air (13), **caractérisé en ce que** le volet répartiteur d'air (2) est configuré comme élément de régulation d'air (1) conformément au moins à l'une quelconque des revendications 1 à 3.

5. Dispositif de chauffage et de ventilation selon la revendication 4, **caractérisé en ce que** l'axe de pivotement (6) de l'élément de régulation d'air (1) est disposé, dans la zone de mélange d'air (13), à proximité du conduit de ventilation situé à l'avant (14).

6. Dispositif de chauffage et de ventilation selon la revendication 5, **caractérisé en ce que** l'axe de pivotement (6) est positionné à proximité d'une paroi qui relie le conduit de ventilation situé à l'avant (14) au conduit de ventilation situé à l'arrière (16).

7. Dispositif de chauffage et de ventilation selon la revendication 4, 5 ou 6, **caractérisé en ce que** l'agencement en forme de pont (7) recouvre une entrée du conduit de ventilation situé à l'avant (14) quand le conduit de dégivrage (15) est fermé.
